# EUROPEAN PATENT SPECIFICATION

(11) **EP 2 539 987 B1**
(45) Date of publication and mention of the grant of the patent: **20.11.2013**
(21) Application number: 10713142.7
(22) Date of filing: 23.02.2010
(51) Int. Cl.: H02J 7/00, B60L 11/18, H02J 7/35, H02M 7/483, H02M 7/49, H02J 7/02

(54) **AN ELECTRIC PLANT WITH CAPACITY TO CHARGE ELECTRIC BATTERIES**
ELEKTRISCHE ANLAGE ZUM LADEN VON BATTERIEN
INSTALLATION ÉLÉCTRIQUE APTE À CHARGER DES BATTERIES

(43) Date of publication of application: 02.01.2013
(73) Proprietor: ABB Research Ltd., 8050 Zürich (CH)
(72) Inventor: DEMETRIADES, Georgios, S-725 91 Västerås (SE); PAPASTERGIOU, Konstantinos, CH-1242 Geneve (CH); SANNINO, Ambra, SE-723 46 Västeras (SE)
(74) Representative: Ahrengart, Kenneth
(86) International application number: PCT/EP2010/052226
(87) International publication number: WO 2011/103911

(56) References cited:
- EP-A2- 0 116 925
- WO-A1-2009/033506
- WO-A1-2009/086927
- WO-A2-2006/124868

## Description

### TECHNICAL FIELD OF THE INVENTION AND BACKGROUND ART

The present invention relates to an electric plant with a capacity to charge electric batteries, such as for electric vehicles, especially electric cars.

Although the present invention is directed to an electric plant with a capacity to charge electric batteries, such an electric plant may just as well have another primary use and is perhaps not at all used for charging batteries even if that would be possible. However, the case of such an electric plant with a capacity to charge electric batteries for electric vehicles, especially electric cars, will now be explained with the aim to illuminate the present invention and the problems to be solved thereby but not in any way restrict the invention thereto.

Due to the increasing extent of climate discussions most car manufacturers are now promoting zero emission mobility, which is supported among others by US and EU administrations, which invest public funds to advance electric vehicle technology and the charging infrastructure for such vehicles. Thus, there is a rapidly growing need of providing electric plants with a capacity to charge electric batteries for electric vehicles and which may be designed to efficiently obtain charging of a rapidly growing number of electric vehicles. When charging electric batteries for such electric vehicles an assembly or package of a plurality of batteries connected in series and/or in parallel will then be simultaneously charged.

Electric plants of this type are already known through for instance EP 1 610 436 A1 and WO 2009/131336 A2, which both disclose electric plants designed to charge electric batteries connected in series. However, there is of course an ongoing attempt to improve such plants, such as with respect to efficiency, operation reliability, capacity etc. WO2009033506 discloses an electric plant to charge batteries, said plant comprising a voltage source converter.

### SUMMARY OF THE INVENTION

The object of the present invention is to provide an electric plant of the type defined in the introduction being in at least some aspect improved with respect to such plants already known.

This object is according to the invention obtained by providing such a plant with the following features:
• it is a plant for transmitting electric power comprising a Voltage Source Converter, an alternating voltage network connected to an alternating voltage side of the converter and a direct voltage part connected to the direct voltage side of the converter, in which the Voltage Source Converter has at least one phase leg connected to opposite poles of said direct voltage side of the converter and comprising a series connection of switching cells, each said switching cell having on one hand at least two semiconductor assemblies connected in series and having each a semiconductor device of turn-off type and a free-wheeling diode connected in parallel therewith and on the other at least one energy storing capacitor as well as two terminals connecting the cell to adjacent cells in said series connection of switching cells, a mid point of said series connection of switching cells forming a phase output connected to said alternating voltage side of the converter, in which the converter comprises an arrangement configured to control said semiconductor devices of each switching cell so that each said switching cell will obtain one of two switching states, namely a first switching state and a second switching state, in which the voltage across said at least one energy storing capacitor and a zero-voltage, respectively, is supplied across said two terminals of the switching cell, for obtaining a determined alternating voltage on said phase output,
• at least one of said switching cells is provided with means configured to connect at least one electric battery in parallel with said at least one capacitor thereof, and
• said control arrangement is configured to be able to carry out said control so as to influence the charging state of said at least one electric battery connected to said at least one switching cell.

"Alternating voltage network" is here to be interpreted broadly and covers the range from a local connection to a few consumers of AC power to electric power networks for distribution or transmission of high voltage AC power.

Accordingly, the present invention is based upon the understanding of the possibility and the advantages to utilize a Voltage Source Converter of the type known through for example DE 101 03 031 A1 and WO 2007/023064 A1 in an electric plant which shall have a capacity to charge electric batteries. A Voltage Source Converter of this type is especially interesting to use for converting direct voltage into alternating voltage and conversely when high powers are to be transmitted, since this also means that high voltages are handled, and the voltage of the direct voltage side of the converter is determined by the voltages across said energy storing capacitors of the switching cells. This means that a comparatively high number of such switching cells are to be connected in series for a high number of semiconductor devices, i.e. said semiconductor assemblies, are to be connected in series in each said switching cell, and a Voltage Source Converter of this type is particularly interesting when the number of the switching cells in said phase leg is comparatively high. A high number of such switching cells connected in series means that it will be possible to control these switching cells to change between said first and second switching state and by that already at said phase output obtain an alternating voltage being very close to a sinusoidal voltage. This may then be obtained already by means of substantially lower switching frequencies then typically used in other known Voltage Source Converters. This makes it possible to obtain substantially lower losses and also considerably reduces problems of filtering and harmonic currents and radio interferences, so that equipment therefor may be less costly. Accordingly, there are a number of advantages of utilizing such a Voltage Source Converter as such, and the present inventors have realized that a Voltage Source Converter of this type may by simple means and by that to comparatively low costs be used for charging electric batteries. Thanks to the connection of at least one electric battery to a said switching cell in parallel with the capacitor thereof it will be possible to by said control arrangement easily adjust the control carried out so that the charging state of said at least one electric battery is changed. Thus, it will then be possible to both fully or partially charge or discharge electric batteries by such a control.

Furthermore, it will be possible to utilize an electric plant that may have other known missions to fulfil with respect to electric power transmittance also to charge electric batteries.

According to an embodiment of the invention said plant comprises means configured to determine the voltage level of said at least one electric battery to be connected in parallel with said at least one capacitor and send information thereabout to the control arrangement, said control arrangement is configured to carry out said control so as to obtain substantially the same voltage across said capacitor as the voltage across said battery, and said connecting means is configured to delay connecting of said at least one electric battery in parallel with said capacitor until the control arrangement has obtained substantially the same voltage across said capacitor as the voltage across said battery. A connecting of at least one electric battery to be charged to a said switching cell may by this easily be obtained by proper control through said control arrangement so as to adjust the voltage across said capacitor to the voltage across said battery.

According to another embodiment of the invention said control arrangement is configured to charge a said at least one electric battery after said connection of said battery in parallel with said at least one capacitor by carrying out said control so that the voltage across said capacitor is gradually increased for obtaining flow of a charging current to said electric battery in parallel with the capacitor. It has been found that charging of a said electric battery may be easily and reliably controlled and efficiently carried out by such a configuration of the control arrangement of the plant.

According to another embodiment of the invention said control arrangement is for disconnecting said at least one electric battery from a said switching cell configured to carry out said control so that the voltage across said at least one capacitor is substantially identical to the voltage across said battery and no charging current is flowing and the connection means is configured to enable a disconnection of said at least one electric battery from the switching cell when this is obtained. These features enable a smooth disconnection of said at least one electric battery from the switching cell when this is desired, such as when the battery is fully charged.

According to another embodiment of the invention said connecting means is configured to connect an assembly of a plurality of electric batteries mutually connected in parallel and/or in series in parallel with said at least one capacitor of said at least one switching cell, and said control arrangement is configured to be able to carry out said control so as to influence the charging state of said assembly of batteries connected to said switching cell. By connecting such an assembly of a plurality of batteries in parallel with said capacitor of said at least one switching cell it will for instance be possible to charge an assembly of batteries arranged in an electric vehicle, such as in an electric car, for the propulsion of the vehicle by connecting this assembly to a switching cell of the plant.

According to another embodiment of the invention a plurality of said switching cells of the converter, such as all switching cells, are provided with said connecting means, which means that a plurality of switching cells may then be simultaneously used for influencing the charging state of at least one electric battery connected to each such switching cell, so that for instance in the case of charging of battery assemblies of electric vehicles such assemblies of a number of electric vehicles may be simultaneously charged through the electric plant.

According to another embodiment of the invention the converter comprises means enabling by-passing of a switching cell in said series connection of switching cells, and said control arrangement is configured to control said by-passing means to optionally by-pass switching cells. This means that the number of levels of the converter may be changed in dependence of the needs prevailing for influencing the charging state of electric batteries or transmitting electric power between the direct voltage side and the alternating voltage side of the converter.

According to another embodiment of the invention said control arrangement is configured to carry out said control of said semiconductor devices of the switching cells so that upon charging of at least one said electric battery at least a part of the electric energy for this charging is fed to said battery from said alternating voltage network. The control arrangement may easily be designed to carry out such a control utilizing electric power from the alternating voltage network to charge a said electric battery. According to another embodiment of the invention said direct voltage part comprises at least one generator of electric power utilizing a renewable energy source, such as wind power or solar energy power, connected to said direct voltage side of the converter. It may then be possible to arrange one or several wind power turbines and/or solar energy panels close to the Voltage Source Converters and by that the location of said at least one electric battery, so that for instance an electric vehicle charging station with local renewable energy sources may be provided. It will then also be possible to use electric batteries connected to the Voltage Source Converter for storing some of the surplus of wind power energy that may be occasionally generated. The same is valid for solar energy panels, which by this may through storage of energy in said batteries connected to switching cells provide energy even during nights.

According to another embodiment of the invention constituting a further development of the embodiment last mentioned said control arrangement is configured to carry out said control for feeding at least a part of the electric energy for charging at least one said electric battery from said direct voltage side of the converter.

According to another embodiment of the invention said control arrangement is configured to carry out said control so as to feed at least a part of electric energy arriving to the converter from said at least one generator on the direct voltage side thereof to said alternating voltage network. Thus, electric energy generated on the direct voltage side may be used to charge electric batteries connected to the converter when desired and when surplus of electric power is generated some of that power may then be fed to the alternating voltage network. Any type of combination of electric power from said direct voltage side and the alternating voltage network may also be used for charging batteries.

According to another embodiment of the invention said converter is configured to have at least one said electric battery charged connected to at least one said switching cell for allowing the control arrangement to carry out said control so that the converter functions as an Uninterrupted Power Supply (UPS) for supplying electric energy to the direct voltage side or the alternating voltage side of the converter upon interruption of supply of electric power to that side of the converter. Thus, an electric plant according to the present invention may thanks to the possibility to carry out a control to influence the charging state of a said electric battery be used for providing Uninterrupted Power Supply functionality.

According to another embodiment of the invention said direct voltage side part consists of capacitors hanging freely and said control arrangement of the converter is configured to be able to carry out said control so as to obtain an operation of said converter as Static Var Compensator (SVC). Accordingly, an electric plant according to the present invention having a capacity to charge electric batteries may still be used for reactive power compensation.

According to another embodiment of the invention said at least one switching cell of the converter configured to have at least one electric battery connected in parallel with the capacitor thereof is configured to have a voltage of 10 V - 10 kV, especially 100 V - 1 kV, across said at least one capacitor and by that across said at least one electric battery in parallel therewith when the latter is fully charged. As already stated said at least one electric battery may be only one electric battery or an assembly of such electric batteries mutually connected in parallel and/or in series, and it may for instance be mentioned that a typical total voltage across such an electric battery package in an electric car may be 500 V, and the charging current may then for example be 40 A, which would then mean a charging power of a switching cell of the converter in the order of 20 kW. According to another embodiment of the invention said converter has three said phase legs, and said alternating voltage network is a three-phase alternating voltage network.

The present invention also relates to a station for charging batteries used for the propulsion of electric or hybrid vehicles, such as cars. The advantageous features and advantages of such a station according to the present invention appear clearly from the discussion above of an electric plant according to the present invention.

The invention also relates to a use of a plant for transmitting electric power having a Voltage Source Converter defined above for charging electric batteries, especially electric batteries used for propulsion of electric or hybrid vehicles, such as cars, which for the reasons presented above is a preferred use of exactly such a plant for transmitting electric power.

Further advantages as well as advantageous features of the invention will appear from the following description.

### BRIEF DESCRIPTION OF THE DRAWINGS

With reference to the appended drawings, below follows a specific description of embodiments of the invention cited as examples.

In the drawings:
- Fig 1: is a very simplified view showing the general construction of an electric plant according to the present invention,
- Fig 2: is a simplified view of an electric plant according to the present invention,
- Fig 3: is a view illustrating a switching cell of a plant according to the present invention,
- Fig 4: is a view corresponding to Fig 3 with an electric battery to be charged connected to said switching cell,
- Fig 5: is a view corresponding to Fig 3 of an alternative design of a switching cell in an electric plant according to the invention,
- Fig 6: is a view corresponding to Fig 4 illustrating how an assembly of electric batteries may be connected to a switching cell of the electric plant, and
- Fig 7: is a simplified view illustrating the general construction of an electric car charging station according to the present invention.

### DETAILED DESCRIPTION OF EMBODIMENTS OF THE INVENTION

Explained herein are embodiments of the invention, describing an electric plant of the invention, a station for charging batteries used for propulsion of electric or hybrid vehicles as well as use of a plant for transmitting electric power for charging electric batteries. The invention may, however, be embodied in may different forms and should not be construed as being limited to the exemplary embodiments set forth herein; rather, these embodiments are provided so that this disclosure will be thorough and complete, and will fully convey the concept of the invention to those skilled in the art.

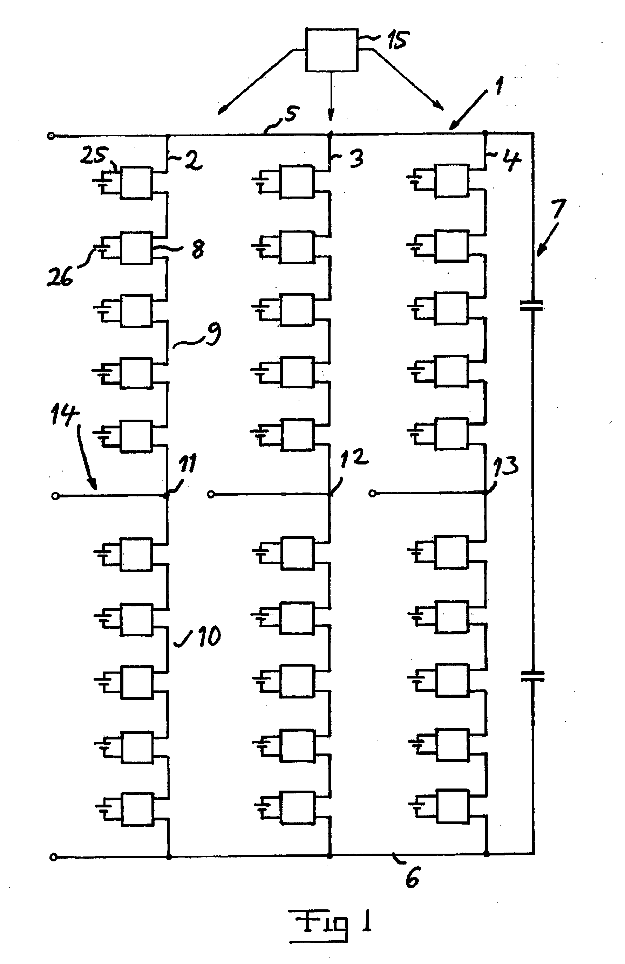

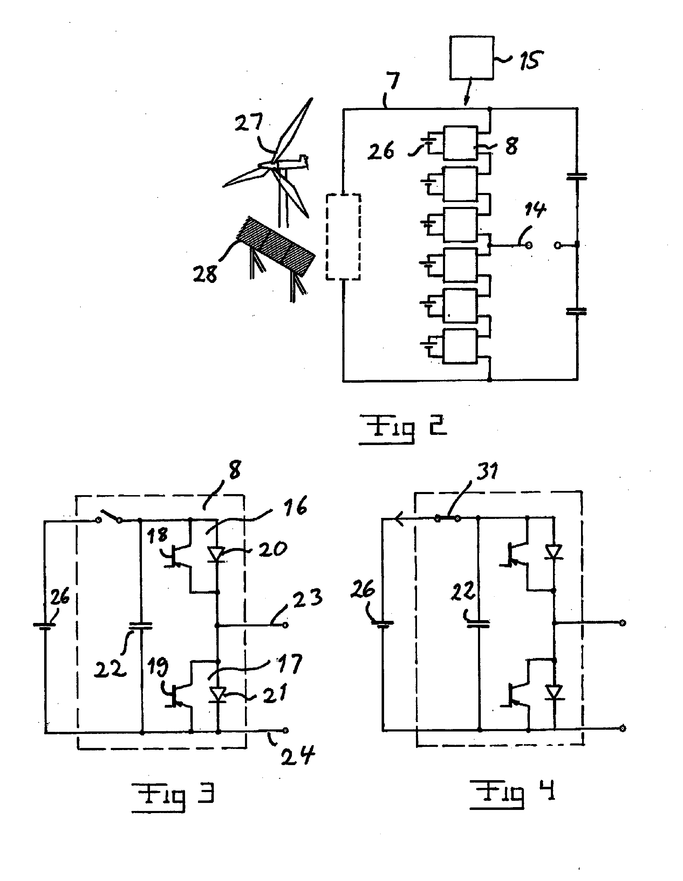

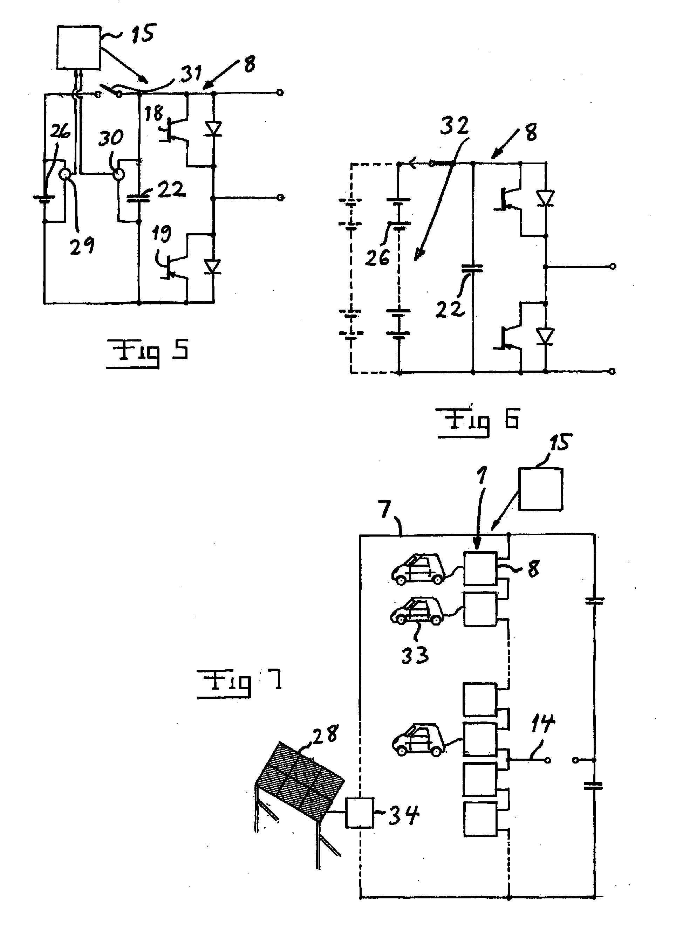

The general construction of an electric plant with a capacity to charge electric batteries, such as for electric vehicles, especially electric cars, is schematically illustrated in Fig 1 and comprises a Voltage Source Converter 1 having three phase legs 2-4 connected to opposite poles 5, 6 of a direct voltage part 7 of the converter, which may have different constructions, such as capacitors hanging freely when the converter is used as a SVC for reactive power compensation or any other conceivable construction, such as the one disclosed below while referring to Figs 2 and 7.

Each phase leg comprises a series connection of switching cells 8 indicated by boxes, in the present case 10 to the number, and this series connection is divided into two equal parts, an upper valve branch 9 and a lower valve branch 10, separated by a mid point 11-13 forming a phase output connected to an alternating voltage side of the converter. The phase outputs 11-13 may possibly through a transformer connect to a three phase alternating voltage network 14. Filtering equipment is also arranged on said alternating voltage side for improving the shape of the alternating voltage on said alternating voltage side.

A control arrangement 15 is arranged for controlling the switching cells 8 and by that the converter to convert direct voltage into alternating voltage and conversely.

The Voltage Source Converter in this electric plant has switching cells 8 of the type having on one hand at least two semiconductor assemblies 16, 17 (see Fig 3) with each a semiconductor device 18, 19 of turn-off type and a free-wheeling diode 20, 21 connected in parallel therewith and of the other at least one energy storing capacitor 22, and two examples of such switching cells are shown in Fig 3 and Fig 5. The terminals 23, 24 of the switching cell are adapted to be connected to adjacent switching cells in the series connection of switching cells forming a phase leg. The semiconductor devices 18, 19 are in this case IGBT:s connected in parallel with the diode 20, 21. Although only one semiconductor device and one diode is shown per assembly these may stand for a number of semiconductor devices and diodes, respectively, connected in parallel for sharing the current flow through the assembly. One terminal 23 is connected to the mid point between the two semiconductor assemblies. The other terminal 24 is connected to the energy storing capacitor 22, in the embodiment of Fig 3 to one side thereof and in the embodiment according to Fig 5 to the other side thereof. It is pointed out that each semiconductor device and each diode as shown in Figs 3-6 may be more than one connected in series for being able to handle the voltages to be handled, and the semiconductor devices so connected in series may then be controlled simultaneously so as to act as one single semiconductor device.

The switching cells shown in Fig 3 and in Fig 5 may be controlled to obtain one of a) a first switching state and b) a second switching state, in which for a) the voltage across the capacitor 22 and for b) a zero voltage is applied across the terminals 23, 24. For obtaining the first state in Fig 3 the semiconductor device 18 is turned on and the semiconductor device 19 turned off, and in the embodiment according to Fig 5 the semiconductor device 19 is turned on and the semiconductor device 18 is turned off. The switching cells are switched to the second state by changing the state of the semiconductor devices, so that in the embodiment according to Fig 3 the semiconductor device 18 is turned off and 19 turned on and in Fig 5 the semiconductor device 19 is turned off and 18 turned on.

Thus, the control arrangement 15 is configured to control the semiconductor devices of the switching cells for converting direct voltage into alternating voltage and conversely and the direction of flow of electric power through the converter as well as the charging state of the capacitors of the respective switching cell by controlling said semiconductor devices for switching between two said states of the respective switching cell.

An electric plant described so far is already known. However, the electric plant according to the present invention is further provided with a capacity to charge electric batteries, which is obtained by providing at least one of the switching cells, here all, with means 25 configured to connect at least one electric battery 26 in parallel with said at least one capacitor 22 of the switching cell. The control arrangement 15 is configured to be able to carry out said control of the semiconductor devices of the switching cells to influence the charging state of said at least one electric battery connected to said at least one switching cell. "influence the charging state" may be charging or discharging of an electric battery connected to said switching cell.

Fig 2 illustrates an electric plant according to one possible embodiment of the present invention, in which only one phase leg of the converter is shown, although this may typically have three phase legs for connecting to a three-phase alternating voltage network. It is shown how the direct voltage part 7 here comprises generators 27, 28 of electric power utilizing a renewable energy source in the form of wind power and solar energy power, respectively. In the case of generating wind power the generator will be connected to the direct voltage side 7 of the converter through a AC/DC-converter not shown, and a DC/DC-converter is preferably used for connecting solar energy panels to said direct voltage side of the Voltage Source Converter.

The control arrangement 15 may in the plant according to Fig 2 carry out control of the semiconductor devices of the switching cells 8 for transfer of electric power from the renewable energy sources 27, 28 to the alternating voltage network 14, from the alternating voltage network 14 to the electric batteries 26, from the renewable energy sources 27, 28 to the electric batteries 26, from the electric batteries 26 to the alternating voltage network 14 or a mixing of these energy transfers.

The control for charging an electric battery will now be disclosed while making reference to Figs 3-6. It is shown only in Fig 5 how the plant comprises means 29 configured to determine the voltage level of said at least one electric battery to be connected in parallel with said capacitor 22 and send information thereabout to the control arrangement 15. Such means 29 has not been shown in Figs 3, 4 and 6 for simplifying these Figures. The control arrangement 15 is configured to carry out control of the semiconductor devices of the switching cells of the plant so as to obtain substantially the same voltage across said capacitor as the voltage across said battery. It is shown in Fig 5 that means 30 is arranged for measuring the voltage across said capacitor and sending information thereabout to the control arrangement 15. The connecting means 25 comprises a switch 31 configured to obtain delayed connecting of the electric battery in parallel with said capacitor until the control arrangement 15 has obtained substantially the same voltage across the capacitor as the voltage across the battery. Fig 4 shows how the battery is then connected. The control arrangement is configured to charge the electric battery 26 after said connection by carrying out control of the switching cells of the Voltage Source Converter so that the voltage across the capacitor 22 is gradually increased for obtaining flow of charging current to the electric battery in parallel with the capacitor.

Furthermore, for disconnecting said at least one electric battery from a said switching cell the control arrangement 15 is configured to carry out the control of the semiconductor devices of the switching cells of the Voltage Source Converter so that the voltage across said at least one capacitor is substantially identical to the voltage across said battery and no charging current is flowing and the connection means is configured to enable a disconnection of said at least one electric battery from the switching cell when this is obtained. It is shown in Fig 6 how an assembly 32 of a plurality of electric batteries mutually connected in parallel and in series is connected in parallel with the capacitor 22 of a switching cell for changing the charging state of these batteries by a corresponding control carried out through the control arrangement.

The Voltage Source Converter comprises means enabling by-passing of a switching cell in the series connection of switching cells, and the control arrangement 15 is configured to control said by-passing means to optionally by-pass switching cells, and this by-passing means may in the embodiment shown in Fig 3 simply be formed by the semiconductor device 19.

A station for charging batteries used for the propulsion of electric or hybrid vehicles, such as cars, according to an embodiment of the invention is schematically shown in Fig 7. It is shown how electric cars may be connected to a said switching cell each for having the assembly of electric batteries thereof charged. A said assembly may typically have a voltage of 500 V thereacross, and the batteries may typically take a charging current of 40 A, so that the plant may through said switching cell 8 then deliver 20 kW to said assembly of a car 33 connected thereto. It is shown how solar energy panels 28 may be locally arranged in said station, and these may through a DC/DC-converter 34 be connected to the direct voltage side 7 of the Voltage Source Converter 1 for increasing voltage of this direct voltage part and by that the number of switching cells 8 that may be connected in series, so that a high number of cars may be charged simultaneously. The number of switching cells and by that charging sides in the station may by this well be in the order of 100.

The invention is of course not in any way restricted to the embodiments described above, but many possibilities to modifications thereof will be apparent to a person with skill in the art without departing from the scope of the invention as defined in the appended claims.

Not all switching cells of a Voltage Source Converter of an electric plant according to the present invention have to be provided with means for connecting electric batteries thereto.

It is of course well possible to utilize a plant according to the present invention for at day time charge electric batteries connecting to switching cells by electric power delivered from solar energy panels and at night feed energy to the alternating voltage network 14 by discharging these batteries.

## Claims

1. An electric plant with a capacity to charge electric batteries, such as for electric vehicles, especially electric cars, wherein said electric plant
• is a plant for transmitting electric power comprising a Voltage Source Converter (1), an alternating voltage network (14) connected to an alternating voltage side of the converter and a direct voltage part (7) connected to the direct voltage side of the converter, in which the Voltage Source Converter has at least one phase leg (2-4) connected to opposite poles (5, 6) of said direct voltage side of the converter and comprising a series connection of switching cells (8), each said switching cell having on one hand at least two semiconductor assemblies (16, 17) connected in series and having each a semiconductor device (18, 19) of turn-off type and a free-wheeling diode (20, 21) connected in parallel therewith and on the other at least one energy storing capacitor (22) as well as two terminals (23, 24) connecting the cell to adjacent cells in said series connection of switching cells, a mid point (11-13) of said series connection of switching cells forming a phase output connected to said alternating voltage side of the converter, in which the converter comprises an arrangement (15) configured to control said semiconductor devices of each switching cell so that each said switching cell will obtain one of two switching states, namely a first switching state and a second switching state, in which the voltage across said at least one energy storing capacitor and a zero-voltage, respectively, is supplied across said two terminals (23, 24) of the switching cell, for obtaining a determined alternating voltage on said phase output,
• at least one of said switching cells is provided with means (25) configured to connect at least one electric battery (26) in parallel with said at least one capacitor (22) thereof, and
• said control arrangement (15) is configured to be able to carry out said control so as to influence the charging state of said at least one electric battery connected to said at least one switching cell.

2. A plant according to claim 1, **characterized in that** it comprises means (29) configured to determine the voltage level of said at least one electric battery (26) to be connected in parallel with said at least one capacitor (22) and send information thereabout to the control arrangement (15), that said control arrangement is configured to carry out said control so as to obtain substantially the same voltage across said capacitor as the voltage across said battery, and that said connecting means (25) is configured to delay connecting of said at least one electric battery in parallel with said capacitor until the control arrangement has obtained substantially the same voltage across said capacitor as the voltage across said battery.

3. A plant according to claim 2, **characterized in that** said control arrangement (15) is configured to charge a said at least one electric battery (26) after said connection of said battery in parallel with said at least one capacitor (22) by carrying out said control so that the voltage across said capacitor is gradually increased for obtaining flow of a charging current to said electric battery in parallel with the capacitor.

4. A plant according to any of the preceding claims, **characterized in that** for disconnecting said at least one electric battery (26) from a said switching cell said control arrangement (15) is configured to carry out said control so that the voltage across said at least one capacitor (22) is substantially identical to the voltage across said battery and no charging current is flowing and the connection means is configured to enable a disconnection of said at least one electric battery from the switching cell (8) when this is obtained.

5. A plant according to any of the preceding claims, **characterized in that** said connecting means (25) is configured to connect an assembly (32) of a plurality of electric batteries mutually connected in parallel and/or in series in parallel with said at least one capacitor (22) of said at least one switching cell (8), and that said control arrangement (15) is configured to be able to carry out said control so as to influence the charging state of said assembly of batteries connected to said switching cell.

6. A plant according to any of the preceding claims, **characterized in that** a plurality of said switching cells (8) of the converter, such as all switching cells, is provided with said connecting means.

7. A plant according to claim 6, **characterized in that** the converter comprises means enabling by-passing of a switching cell (8) in said series connection of switching cells, and that said control arrangement (15) is configured to control said by-passing means to optionally by-pass switching cells.

8. A plant according to any of the preceding claims, **characterized in that** said control arrangement (15) is configured to carry out said control of said semiconductor devices of the switching cells so that upon charging of at least one said electric battery (26) at least a part of the electric energy for this charging is fed to said battery from said alternating voltage network (14).

9. A plant according to any of the preceding claims, **characterized in that** said direct voltage part comprises at least one generator (27, 28) of electric power utilizing a renewable energy source, such as wind power or solar energy power, connected to said direct voltage side (7) of the converter.

10. A plant according to claim 9, **characterized in that** said control arrangement (15) is configured to carry out said control for feeding at least a part of the electric energy for charging at least one said electric battery (26) from said direct voltage side (7) of the converter.

11. A plant according to claim 9 or 10, **characterized in that** said control arrangement (15) is configured to carry out said control so as to feed at least a part of electric energy arriving to the converter from said at least one generator (27, 28) on the direct voltage side thereof to said alternating voltage network (14).

12. A plant according to any of claims 1-8, **characterized in that** said converter (1) is configured to have at least one said electric battery (26) charged connected to at least one said switching cell (8) for allowing the control arrangement (15) to carry out said control so that the converter functions as an Uninterrupted Power Supply (UPS) for supplying electric energy to the direct voltage side or the alternating voltage side of the converter upon interruption of supply of electric power to that side of the converter.

13. A plant according to any of the claims 1-8, **characterized in that** said direct voltage side part consists of capacitors hanging freely and said control arrangement of the converter is configured to be able to carry out said control so as to obtain an operation of said converter as Static Var Compensator (SVC).

14. A plant according to any of the preceding claims, **characterized in that** said at least one switching cell (8) of the converter configured to have at least one electric battery (26) connected in parallel with the at least one capacitor (22) thereof is configured to have a voltage of 10 V - 10 kV, especially 100 V - 1 kV, across said capacitor and by that across said at least one electric battery in parallel therewith when the latter is fully charged.

15. A plant according to any of the preceding claims, **characterized in that** said converter has three said phase legs (2-4), and that said alternating voltage network (14) is a three-phase alternating voltage network.

16. Use of a plant for transmitting electric power according to claim 1 for charging electric batteries, especially electric batteries used for propulsion of electric or hybrid vehicles, such as cars.

## Patentansprüche

1. Elektrische Anlage mit einer Fähigkeit zum Laden elektrischer Batterien, wie etwa für Elektrofahrzeuge, insbesondere Elektroautos, wobei
• die elektrische Anlage eine Anlage zum Übertragen elektrischer Energie ist, welche aufweist: einen Spannungszwischenkreis-Stromrichter (1), ein Wechselspannungsnetz (14), das mit einer Wechselspannungsseite des Stromrichters verbunden ist, und einen Gleichspannungsteil (7), der mit der Gleichspannungsseite des Stromrichters verbunden ist, wobei der Spannungszwischenkreis-Stromrichter mindestens einen Phasenzweig (2-4) aufweist, der mit entgegengesetzten Polen (5, 6) der Gleichspannungsseite des Stromrichters verbunden ist und eine Reihenschaltung von Schaltzellen (8) aufweist, wobei jede Schaltzelle einerseits mindestens zwei Halbleiteranordnungen (16, 17), die in Reihe geschaltet sind und jeweils ein abschaltbares Halbleiterbauelement (18, 19) und eine zu diesem parallel geschaltete Freilaufdiode (20, 21) aufweisen, und andererseits mindestens einen Energiespeicherkondensator (22) sowie zwei Anschlussklemmen (23, 24), welche die Zelle mit benachbarten Zellen in der Reihenschaltung von Schaltzellen verbinden, aufweist, wobei ein Mittelpunkt (11-13) der Reihenschaltung von Schaltzellen einen Phasenausgang bildet, der mit der Wechselspannungsseite des Stromrichters verbunden ist, wobei der Stromrichter eine Anordnung (15) aufweist, die dafür ausgebildet ist, die Halbleiterbauelemente jeder Schaltzelle so zu steuern, dass jede Schaltzelle einen von zwei Schaltzuständen annimmt, nämlich einen ersten Schaltzustand und einen zweiten Schaltzustand, wobei die Spannung über dem mindestens einen Energiespeicherkondensator bzw. eine Nullspannung über die zwei Anschlussklemmen (23, 24) der Schaltzelle zugeführt werden, um eine bestimmte Wechselspannung an dem Phasenausgang zu erhalten,
• mindestens eine der Schaltzellen mit Mitteln (25) versehen ist, die dafür ausgebildet sind, mindestens eine elektrische Batterie (26) zu mindestens einem Kondensator (22) dieser Schaltzelle parallel zu schalten, und
• die Steuerungsanordnung (15) so ausgebildet ist, dass sie in der Lage ist, die Steuerung so auszuführen, dass sie den Ladezustand der mindestens einen elektrischen Batterie, die mit der mindestens einen Schaltzelle verbunden ist, beeinflusst.

2. Anlage nach Anspruch 1, **dadurch gekennzeichnet, dass** sie Mittel (29) aufweist, die dafür ausgebildet sind, den Spannungspegel der mindestens einen elektrischen Batterie (26) zu bestimmen, die zu dem mindestens einen Kondensator (22) parallel geschaltet werden soll, und Informationen darüber zu der Steuerungsanordnung (15) zu senden, dass die Steuerungsanordnung dafür ausgebildet ist, die Steuerung so auszuführen, dass über dem Kondensator im Wesentlichen dieselbe Spannung erhalten wird wie über der Batterie, und dass das Verbindungsmittel (25) dafür ausgebildet ist, das Parallelschalten der mindestens einen elektrischen Batterie zu dem Kondensator zu verzögern, bis die Steuerungsanordnung über dem Kondensator im Wesentlichen dieselbe Spannung erzielt hat wie über der Batterie.

3. Anlage nach Anspruch 2, **dadurch gekennzeichnet, dass** die Steuerungsanordnung (15) dafür ausgebildet ist, eine solche mindestens eine elektrische Batterie (26) nach dem Parallelschalten der Batterie zu dem mindestens einen Kondensator (22) zu laden, indem die Steuerung so ausgeführt wird, dass die Spannung über dem Kondensator allmählich erhöht wird, um einen Fluss eines Ladestroms zu der zu dem Kondensator parallel geschalteten elektrischen Batterie zu bewirken.

4. Anlage nach einem der vorhergehenden Ansprüche, **dadurch gekennzeichnet, dass** zum Trennen der mindestens einen elektrischen Batterie (26) von einer Schaltzelle die Steuerungsanordnung (15) dafür ausgebildet ist, die Steuerung so auszuführen, dass die Spannung über dem mindestens einen Kondensator (22) im Wesentlichen mit der Spannung über der Batterie identisch ist und kein Ladestrom fließt, und das Verbindungsmittel dafür ausgebildet ist, eine Trennung der mindestens einen elektrischen Batterie von der Schaltzelle (8) zu ermöglichen, wenn dies bewirkt wird.

5. Anlage nach einem der vorhergehenden Ansprüche, **dadurch gekennzeichnet, dass** das Verbindungsmittel (25) dafür ausgebildet ist, eine Anordnung (32) von mehreren elektrischen Batterien, die zueinander parallel und/oder in Reihe geschaltet sind, zu dem mindestens einen Kondensator (22) der mindestens einen Schaltzelle (8) parallel zu schalten, und dass die Steuerungsanordnung (15) so ausgebildet ist, dass sie in der Lage ist, die Steuerung so auszuführen, dass sie den Ladezustand der Anordnung von Batterien, die mit der Schaltzelle verbunden ist, beeinflusst.

6. Anlage nach einem der vorhergehenden Ansprüche, **dadurch gekennzeichnet, dass** mehrere Schaltzellen (8) des Stromrichters, wie etwa alle Schaltzellen, mit dem Verbindungsmittel versehen sind.

7. Anlage nach Anspruch 6, **dadurch gekennzeichnet, dass** der Stromrichter Mittel aufweist, die ein Umgehen einer Schaltzelle (8) in der Reihenschaltung von Schaltzellen ermöglichen, und dass die Steuerungsanordnung (15) dafür ausgebildet ist, diese Umgehungsmittel zu steuern, um optional Schaltzellen zu umgehen.

8. Anlage nach einem der vorhergehenden Ansprüche, **dadurch gekennzeichnet, dass** die Steuerungsanordnung (15) dafür ausgebildet ist, die Steuerung der Halbleiterbauelemente der Schaltzellen so auszuführen, dass beim Laden mindestens einer der elektrischen Batterien (26) mindestens ein Teil der elektrischen Energie für diesen Ladevorgang der Batterie von dem Wechselspannungsnetz (14) zugeführt wird.

9. Anlage nach einem der vorhergehenden Ansprüche, **dadurch gekennzeichnet, dass** der Gleichspannungsteil mindestens einen Generator (27, 28) von elektrischer Energie aufweist, der eine erneuerbare Energiequelle wie etwa Windenergie oder Solarenergie verwendet und der mit der Gleichspannungsseite (7) des Stromrichters verbunden ist.

10. Anlage nach Anspruch 9, **dadurch gekennzeichnet, dass** die Steuerungsanordnung (15) dafür ausgebildet ist, die Steuerung zum Zuführen wenigstens eines Teils der elektrischen Energie zum Laden mindestens einer elektrischen Batterie (26) von der Gleichspannungsseite (7) des Stromrichters aus auszuführen.

11. Anlage nach Anspruch 9 oder 10, **dadurch gekennzeichnet, dass** die Steuerungsanordnung (15) dafür ausgebildet ist, die Steuerung so auszuführen, um wenigstens ein Teil der elektrischen Energie, die den Stromrichter von mindestens einem Generator (27, 28) auf seiner Gleichspannungsseite erreicht, dem Wechselspannungsnetz (14) zuzuführen.

12. Anlage nach einem der Ansprüche 1-8, **dadurch gekennzeichnet, dass** der Stromrichter (1) dafür ausgebildet ist, dass mindestens eine elektrische Batterie (26), die mit mindestens einer Schaltzelle (8) verbunden ist, geladen wird, um zu ermöglichen, dass die Steuerungsanordnung (15) die Steuerung so ausführt, dass der Stromrichter als eine unterbrechungsfreie Stromversorgung (USV) zum Zuführen von elektrischer Energie zu der Gleichspannungsseite oder der Wechselspannungsseite des Stromrichters bei einer Unterbrechung der Versorgung der betreffenden Seite des Stromrichters mit elektrischer Energie fungiert.

13. Anlage nach einem der Ansprüche 1-8, **dadurch gekennzeichnet, dass** der Gleichspannungsseitenteil aus Kondensatoren besteht, die frei hängen, und die Steuerungsanordnung des Stromrichters so ausgebildet ist, dass sie in der Lage ist, die Steuerung so auszuführen, dass ein Betrieb des Stromrichters als statischer Blindleistungskompensator (SVC) bewirkt wird.

14. Anlage nach einem der vorhergehenden Ansprüche, **dadurch gekennzeichnet, dass** die mindestens eine Schaltzelle (8) des Stromrichters, die dafür ausgebildet ist, dass mindestens eine elektrische Batterie (26) zu dem mindestens einen Kondensator (22) dieser Schaltzelle parallel geschaltet wird, dafür ausgebildet ist, dass eine Spannung von 10 V - 10 kV, insbesondere von 100 V - 1 kV, über dem Kondensator anliegt und über der mindestens einen elektrischen Batterie, die zu diesem parallel geschaltet ist, wenn die Letztere vollständig geladen ist.

15. Anlage nach einem der vorhergehenden Ansprüche, **dadurch gekennzeichnet, dass** der Stromrichter drei Phasenzweige (2-4) aufweist und dass das Wechselspannungsnetz (14) ein Dreiphasen-Wechselspannungsnetz ist.

16. Verwendung einer Anlage zum Übertragen elektrischer Energie nach Anspruch 1 zum Laden elektrischer Batterien, insbesondere elektrischer Batterien, die für den Antrieb von Elektro- oder Hybridfahrzeugen wie etwa Autos verwendet werden.

## Revendications

1. Installation électrique apte à charger des batteries électriques, destinées notamment à des véhicules électriques, en particulier des voitures électriques,
ladite installation électrique étant une installation de transmission d'énergie électrique comportant un convertisseur (1) de source de tension, un réseau (14) sous tension alternative relié à un côté tension alternative de le convertisseur et une partie (7) sous tension continue reliée au côté tension continue du convertisseur, le convertisseur de source de tension comprenant au moins une branche (2-4) de phase reliée à des pôles opposés (5, 6) dudit côté tension continue du convertisseur et comportant un branchement en série de cellules (8) de commutation, chacune desdites cellules de commutation comprenant d'une part au moins deux ensembles semiconducteurs (16, 17) branchés en série et comprenant chacun un dispositif semiconducteur (18, 19) de type interruptible et une diode (20, 21) de roue libre branchée en parallèle avec celui-ci et d'autre part au moins un condensateur (22) de stockage d'énergie ainsi que deux bornes (23, 24) reliant la cellule à des cellules adjacentes dans ledit branchement en série de cellules de commutation, un milieu (11-13) dudit branchement en série de cellules de commutation formant une sortie de phase reliée audit côté tension alternative du convertisseur, le convertisseur comportant un agencement (15) configuré pour commander lesdits dispositifs semiconducteurs de chaque cellule de commutation de telle façon que chacune desdites cellules de commutation prenne un état parmi deux états de commutation, à savoir un premier état de commutation et un deuxième état de commutation, dans lesquels la tension aux bornes dudit ou desdits condensateurs de stockage d'énergie et une tension nulle, respectivement, est fournie entre lesdites deux bornes (23, 24) de la cellule de commutation, pour obtenir une tension alternative déterminée sur ladite sortie de phase,
au moins une desdites cellules de commutation étant munie d'un moyen (25) configuré pour brancher au moins une batterie électrique (26) en parallèle avec ledit ou lesdits condensateurs (22) de celle-ci, et
ledit agencement (15) de commande étant configuré pour pouvoir réaliser ladite commande de façon à influencer l'état de charge de ladite ou desdites batteries électriques reliées à ladite ou auxdites cellules de commutation.

2. Installation selon la revendication 1, **caractérisée en ce qu'**elle comporte un moyen (29) configuré pour déterminer le niveau de tension de ladite ou desdites batteries électriques (26) à brancher en parallèle avec ledit ou lesdits condensateurs (22) et pour envoyer des informations le concernant à l'agencement (15) de commande, **en ce que** ledit agencement de commande est configuré pour réaliser ladite commande de façon à obtenir sensiblement la même tension aux bornes dudit condensateur que la tension aux bornes de ladite batterie, et **en ce que** ledit moyen (25) de branchement est configuré pour retarder le branchement de ladite ou desdites batteries électriques en parallèle avec ledit condensateur jusqu'à ce que l'agencement de commande ait obtenu sensiblement la même tension aux bornes dudit condensateur que la tension aux bornes de ladite batterie.

3. Installation selon la revendication 2, **caractérisée en ce que** ledit agencement (15) de commande est configuré pour charger ladite ou une desdites batteries électriques (26) après ledit branchement de ladite batterie en parallèle avec ledit ou lesdits condensateurs (22) en réalisant ladite commande de telle façon que la tension aux bornes de ledit condensateur soit progressivement augmentée pour obtenir la circulation d'un courant de charge vers ladite batterie électrique en parallèle avec le condensateur.

4. Installation selon l'une quelconque des revendications précédentes, **caractérisée en ce que**, pour débrancher ladite ou lesdites batteries électriques (26) d'une desdites cellules de commutation, ledit agencement (15) de commande est configuré pour réaliser ladite commande de telle façon que la tension aux bornes dudit ou desdits condensateurs (22) soit sensiblement identique à la tension aux bornes de ladite batterie et qu'aucun courant de charge ne circule, et **en ce que** le moyen de branchement est configuré pour permettre un débranchement de ladite ou desdites batteries électriques de la cellule (8) de commutation lorsque ceci est obtenu.

5. Installation selon l'une quelconque des revendications précédentes, **caractérisée en ce que** ledit moyen (25) de branchement est configuré pour relier un ensemble (32) d'une pluralité de batteries électriques, reliées les unes aux autres en parallèle et / ou en série, en parallèle avec ledit ou lesdits condensateurs (22) de ladite ou desdites cellules (8) de commutation, et **en ce que** ledit agencement (15) de commande est configuré pour pouvoir réaliser ladite commande de façon à influencer l'état de charge dudit ensemble de batteries relié à ladite cellule de commutation.

6. Installation selon l'une quelconque des revendications précédentes, **caractérisée en ce qu'**une pluralité desdites cellules (8) de commutation du convertisseur, par exemple toutes les cellules de commutation, est munie dudit moyen de branchement.

7. Installation selon la revendication 6, **caractérisée en ce que** le convertisseur comporte un moyen permettant de contourner une cellule (8) de commutation dudit branchement en série de cellules de commutation, et **en ce que** ledit agencement (15) de commande est configuré pour commander ledit moyen de contournement pour contourner de façon optionnelle des cellules de commutation.

8. Installation selon l'une quelconque des revendications précédentes, **caractérisée en ce que** ledit agencement (15) de commande est configuré pour réaliser ladite commande desdits dispositifs semiconducteurs des cellules de commutation de telle façon que, lors de la charge d'au moins une desdites batteries électriques (26), au moins une partie de l'énergie électrique destinée à cette charge est fournie à ladite batterie à partir dudit réseau (14) sous tension alternative.

9. Installation selon l'une quelconque des revendications précédentes, **caractérisée en ce que** ladite partie sous tension continue comporte au moins un générateur (27, 28) de puissance électrique employant une source d'énergie renouvelable, comme l'énergie éolienne ou l'énergie solaire, reliée audit côté tension continue (7) du convertisseur.

10. Installation selon la revendication 9, **caractérisée en ce que** ledit agencement (15) de commande est configuré pour réaliser ladite commande en vue de fournir au moins une partie de l'énergie électrique destinée à charger au moins une desdites batteries électriques (26) à partir dudit côté tension continue (7) du convertisseur.

11. Installation selon la revendication 9 ou 10, **caractérisée en ce que** ledit agencement (15) de commande est configuré pour réaliser ladite commande de façon à fournir au moins une partie de l'énergie électrique arrivant au convertisseur à partir dudit ou desdits générateurs (27, 28) du côté tension continue de celui-ci audit réseau (14) sous tension alternative.

12. Installation selon l'une quelconque des revendications 1 à 8, **caractérisée en ce que** ledit convertisseur (1) est configuré pour comprendre au moins une desdites batteries électriques (26) chargée reliée à au moins une desdites cellules (8) de commutation pour permettre à l'agencement (15) de commande de réaliser ladite commande de telle façon que le convertisseur fonctionne comme une alimentation électrique permanente (UPS) destinée à fournir de l'énergie électrique au côté tension continue ou au côté tension alternative du convertisseur en cas d'interruption de l'alimentation en énergie électrique vers le côté en question du convertisseur.

13. Installation selon l'une quelconque des revendications 1 à 8, **caractérisée en ce que** ladite partie du côté tension continue est constituée de condensateurs suspendus librement et **en ce que** ledit agencement de commande du convertisseur est configuré pour pouvoir réaliser ladite commande de façon à obtenir un fonctionnement dudit convertisseur en tant que Compensateur de puissance réactive (SVC).

14. Installation selon l'une quelconque des revendications précédentes, **caractérisée en ce que** ladite ou lesdites cellules (8) de commutation du convertisseur, configurée pour qu'au moins une batterie électrique (26) soit branchée en parallèle avec son ou ses condensateurs (22), est configurée pour présenter une tension de 10 V à 10 kV, en particulier de 100 V à 1 kV, aux bornes dudit condensateur et de ce fait aux bornes de ladite ou desdites batteries électriques en parallèle avec celui-ci lorsque cette ou ces dernières sont entièrement chargées.

15. Installation selon l'une quelconque des revendications précédentes, **caractérisée en ce que** ledit convertisseur comprend trois desdites branches (2-4) de phase, et **en ce que** ledit réseau (14) sous tension alternative est un réseau sous tension alternative triphasée.

16. Utilisation d'une installation de transmission d'énergie électrique selon la revendication 1 pour charger des batteries électriques, en particulier des batteries électriques utilisées pour la propulsion de véhicules électriques ou hybrides, notamment des voitures.
